# EUROPÄISCHE PATENTANMELDUNG

(11) **EP 0 598 423 A1**
(43) Veröffentlichungstag der Anmeldung: **25.05.1994**
(21) Anmeldenummer: 93202841.8
(22) Anmeldetag: 06.10.1993
(51) Int. Cl.: H04N 5/92

(54) **Einrichtung zur Aufzeichnung und/oder Wiedergabe digitaler Videodaten**

(30) Priorität: 15.10.1992 DE 4234723
(71) Anmelder: Philips Patentverwaltung GmbH, 22335 Hamburg (DE); Philips Electronics N.V., 5621 BA Eindhoven (NL)
(72) Erfinder: Mester, Roland, c/o PHILIPS PATENTVERWALTUNG GMBH, D-20097 Hamburg (DE)
(74) Vertreter: von Laue, Hanns-Ulrich, Dipl.-Ing.

(57) **Zusammenfassung**

Bei einer Anordnung für ein Gerät zur Aufzeichnung und/oder Wiedergabe datenreduzierter Videodaten auf bzw. von einem Datenträger, die teilweise aus Daten fester Länge, die für eine Wiedergabe mit verminderter Qualität ausreichen, und teilweise als Daten variabler Länge vorliegen, ist zur einfachen Auffindung der Daten fester Länge vorgesehen, daß die Anordnung bei Aufzeichnung der Videodaten auf den Datenträger Datenblöcke einer ersten Kategorie, in denen das Gerät an vorbestimmten Positionen vorbestimmte Daten fester Länge und in den übrigen Bereichen Daten variabler Länge anordnet, und Datenblöcke einer zweiten Kategorie formt, in die Anordnung ausschließlich Daten variabler Länge einfügt, und daß die Anordnung beim Auslesen der Daten von dem Datenträger anhand der Position der Daten fester Länge erkennt, um welche Daten aus den ursprünglichen datenreduzierten Videodaten es sich handelt.

## Beschreibung

Die Erfindung betrifft eine Anordnung für ein Gerät zur Aufzeichnung und/oder Wiedergabe digitaler datenreduzierter Videodaten auf bzw. von einem Datenträger, die teilweise als Daten fester Länge, die für eine Wiedergabe mit verminderter Qualität ausreichen, und teilweise als Daten variabler Länge vorliegen.

Geräte zur Aufzeichnung und/oder Wiedergabe digitaler Videodaten sind in vielfältiger Form bekannt und werden im Studiobereich für die Aufzeichnung von Fernsehsignalen zunehmend eingesetzt. Mit dem Aufkommen von hochzeiligen und hochauflösenden Fernsehsignalen (HDTV) schwillt die aufzuzeichnende Datenmenge derart an, daß auf Verfahren zur Datenreduktion zurückgegriffen werden muß. Derartige Verfahren können nur bedingt mit Daten fester Länge, deren Dekodierung nicht von der "Vorgeschichte" der Daten abhängig ist, arbeiten. Es werden meist Verfahren der Entropiekodierung, bei denen Kodes variabler Länge verwendet werden, eingesetzt. Es sind auch Reduktionsverfahren bekannt, bei denen eine Kombination beider Daten geliefert wird. In diesem Falle liefern die Daten fester Länge, deren Datenworte einzeln dekodierbar sind, Daten aus bestimmten Bildbereichen in gegebenenfalls verminderter Qualität. Die Daten fester Länge reichen bei der Dekodierung aus für eine Wiedergabe mit verminderter Bildqualität.

Bei der Aufzeichnung einer derartigen Kombination von Daten fester Länge und Daten variabler Länge ergibt sich das Problem, daß sich die Daten bezüglich ihrer Position auf dem Datenträger verschieben, wobei diese Verschiebung einerseits abhängt von der Länge der Daten variabler Länge und auch von der Menge der Daten fester Länge, die schwanken kann. Es ist hiermit eine ausschnittsweise Dekodierung, die beispielsweise in Sonderfunktionen erforderlich ist, nur schwer oder gar nicht möglich. Die Daten können mit einer Kennzeichnung versehen werden, die angibt, welche Bildelemente in den Daten kodiert sind. Diese Kennzeichnungen benötigen jedoch zusätzlichen Platz auf dem Datenträger.

Es ist Aufgabe der Erfindung, eine Anordnung für ein Gerät zur Aufzeichung und/oder Wiedergabe digitaler datenreduzierter Videodaten anzugeben, das auf eine derartige Kennzeichnung der Daten verzichten kann und das auch in Wiedergabe-Sonderfunktionen eine Wiedergabe, wenn auch verminderter Bildqualität, gestattet.

Diese Aufgabe ist erfindungsgemäßt dadurch gelöst, daß die Anordnung bei Aufzeichnung der Videodaten auf den Datenträger Datenblöcke wenigstens einer ersten Kategorie formt, in denen das Gerät an vorbestimmten Positionen vorbestimmte Daten fester Länge und in den übrigen Bereichen Daten variabler Länge anordnet, und daß die Anordnung beim Auslesen der Daten von dem Datenträger anhand der Position der Daten fester Länge innerhalb der Datenblöcke der ersten Kategorie erkennt, um welche Daten aus den ursprünglichen datenreduzierten Videodaten es sich handelt.

Die Anordnung bildet also Datenblöcke wenigstens einer ersten Kategorie, wobei in den Datenblöcken eine Mischung aus Daten fester Länge und Daten variabler Länge angeordnet wird. Im Prinzip müssen die Datenblöcke nicht unbedingt vollständig gefüllt werden, wenn nicht genügend Daten vorliegen.

Entscheidend für die Gestaltung der Datenblöcke der ersten Kategorie ist jedoch, daß die Daten fester Länge an vorbestimmten Positionen innerhalb der Datenblöcke angeordnet sind. Dabei gibt bereits die Position an, um welche Videodaten es sich handelt, insbesondere also, welcher Teil des ursprünglichen datenreduzierten Videosignals in diesen Daten enthalten ist. So kann bereits aus der Position der Daten fester Länge ein Rückschluß darauf gezogen werden, welcher Bildpunkt bzw. Bildpunktbereich des Videosignals durch die Daten repräsentiert wird. Es ist dazu keinerlei Kennzeichnung erforderlich - lediglich aus der Position der Daten ist bekannt, um welche Daten es sich handelt.

Diese Identifizierung der Daten fester Länge anhand ihrer Position innerhalb der Datenblöcke der ersten Kategorie gestattet es in Sonderfunktionen, d.h. also Wiedergabefunktionen, die von der Normalgeschwindigkeit abweichen und bei denen gegebenenfalls nicht alle Daten von dem Datenträger gelesen werden können, die Daten fester Länge in den ersten Datenblöcken anhand ihrer Position zu identifzieren. Es genügt dann also, einzelne Daten fester Länge aus den Datenblöcken erster Kategorie auszulesen und aus diesen Daten ein Bild aufzubauen, das eine verminderte Bildqualität aufweist, da die Daten variabler Länge als zusätzliche Information fehlen. Ein Bild verminderter Qualität reicht jedoch beispielsweise für einen Bildsuchlauf aus, da es hier nur darauf ankommt, daß ungefähr erkannt werden kann, um welchen Bildinhalt es sich handelt.

Diese Anordnung der Daten innerhalb der Datenblöcke hat darüber hinaus den Vorteil, daß die Rückgängigmachung der Datenreduzierung auch bei Normalgeschwindigkeit bei der Wiedergabe erleichtert wird, da gegebenenfalls bei auftretenden Fehlern sich das Gerät schnell wieder aufsynchronisieren kann, da es auch nach Fehlern die Datenblöcke der ersten Kategorie und in ihnen die Daten fester Länge schnell wieder auffinden kann und der Dekoder, der die Datenreduktion rückgängig macht, schnell wieder einrasten kann.

Die Anordnung kann in einem Gerät zur Aufzeichnung der Daten, aber auch extern vorgesehen sein.

Gemäß einer Ausgestaltung der Erfindung kann vorgesehen sein, daß die Anordnung zusätzlich Datenblöcke einer zweiten Kategoie formt, in die die Anordnung ausschließlich Daten variabler Länge einfügt.

Je nachdem, wieviele Daten fester Länge in vorgegebener Weise an vorbestimmte Positionen der Datenblöcke erster Kategorie eingefügt werden, kann es erforderlich sein, noch Datenblöcke einer zweiten Kategorie zu formen, in dann ausschließlich Daten variabler Länge eingefügt werden. Auch die Datnblöcke der zweiten Kategorie müssen, wenn nicht genügend Daten vorliegen, nicht vollständig gefüllt werden.

Gemäß einer Ausgestaltung der Erfindung ist vorgesehen, daß die Anordnung in wenigstens einer Wiedergabe-Sonderfunktion, in der die Abtastung des Datenträgers in einer anderen als einer Wiedergabe-Normalgeschwindigkeit erfolgt, ausschließlich die Daten fester Länge in den Datenblöcken der ersten Kategorie zur Wiedergabe auswertet.

Der oben beschriebene Vorteil des einfachen Auffindens der Daten fester Länge innerhalb der Datenblöcke der ersten Kategorie kann, in der Weise ausgenutzt werden, daß bei bestimmten Wiedergabe-Sonderfunktionen ausschließlich auf die Daten fester Länge zugegriffen wird. Auch bei hohen Bildsuchlauf-Geschwindigkeiten ist es möglich, wenigstens einige Daten fester Länge in den Datenblöcken der ersten Kategorie zu lesen und auszuwerten. Auf die Daten variabler Länge kann dann gegebenenfalls völlig verzichtet werden.

Eine weitere Ausgestaltung der Erfindung sieht vor, daß die Datenblöcke und die Daten innerhalb der Datenblöcke in unveränderter Reihenfolge auf den Datenträger geschrieben werden.

Wie oben bereits erläutert wurde, werden die Daten fester Länge innerhalb der Datenblöcke der ersten Kategorie schon anhand ihrer Position innerhalb der Datenblöcke erkannt. Die einfachste Vorgehensweise ist dabei die, daß sowohl die Anordnung der Datenblöcke wie auch die Anordnung der Daten innerhalb der Datenblöcke in unveränderter Form erhalten bleibt. D.h. in der Weise, wie die Datenblöcke erzeugt werden und in der die Daten innerhalb der Datenblöcke angeordnet werden, werden diese auch auf den Datenträger geschrieben.

Eine weitere Ausgestaltung der Erfindung sieht vor, daß die Daten innerhalb der Datenblöcke erster Kategorie in Gruppen zu je 16 Byte unterteilt sind, daß die ersten Daten jeder Gruppe Daten fester Länge sind und daß zu Beginn jeder Gruppe in den Daten fester Länge angegeben ist, wieviele Daten fester Länge innerhalb der Gruppe angeordnet sind.

Die Identifizierung der Standorte der Daten fester Länge innerhalb der Datenblöcke erster Kategorie kann dadurch weiter erleichtert werden, daß die Daten innerhalb der Datenblöcke erster Kategorie in Gruppen unterteilt werden. Diese Gruppen können beispielsweise eine Breite von 16 Bit aufweisen. Zu Beginn jeder dieser Gruppen sind zunächst Daten fester Länge angeordnet. Da die Datenmenge der Daten fester Länge schwanken kann, können innerhalb der Gruppe zu Beginn verschieden viele Daten fester Länge angeordnet sein. Es ist vorteilhaft, zu Beginn jeder Gruppe ein Datenwort vorzusehen, welches angibt, wieviele Daten fester Länge innerhalb der Gruppe vorgesehen sind. Damit gestattet das Gerät eine äußerst flexible Aufzeichnung datenreduzierter Videodaten, bei denen das Verhältnis der Datenmengen der Daten fester Länge einerseits und der Daten variabler Länge andererseits in Grenzen schwanken darf.

Es ist dabei vorteilhaft, wie nach einer weiteren Ausgestaltung der Erfindung vorgesehen ist, daß die Anordnung jeden zweiten Datenblock als Block erster Kategorie formt, da dies die Auffindung der Datenblöcke erster Kategorie insbesondere in Wiedergabe-Sonderfunktionen des Gerätes vereinfacht.

Bei Geräten zur Aufzeichnung und/oder Wiedergabe digitaler Videodaten kann es vorkommen, daß einzelne Datenblöcke in der Signalverarbeitung des Gerätes verschoben oder Kanäle vertauscht werden, insbesondere in Sonberbetriebnsarten ist es also möglicherweise so, daß die Datenblöcke nicht in der ursprünglichen Reihenfolge wiedergabeseitig wieder von dem Gerät zur Verfügung gestellt werden. Insbesondere bei Videodaten, die einer Datenreduktion unterzogen wurden, kann durch eine derartig vertauschte Reihenfolge der Daten bei der Wiedergabe eine Bildstörung hervorgerufen werden, bei datenreduzierten Videodaten kann der Dekoder, der die Datenreduktion rückgängig macht, sogar völlig aus dem Tritt geraten. Es ist daher wichtig, daß eine gegebenenfalls falsche Reihenfolge der Daten bei der Wiedergabe wenigstens erkannt wird. Dazu ist nach einer weiteren Ausgestaltung der Erfindung für die Anordnung vorgesehen, daß die Daten in den Datenblöcken vor Aufzeichnung auf den Datenträger mit einer vorgegebenen Folge von Verschlüsselungs-Datenworten EXKLUSIV-ODER verknüpft werden und daß die Daten wiedergabeseitig mit derselben Folge von Verschlüsselungs-Datenworten so verknüpft werden, daß bei fehlerfreier Wiedergabe jedes Datenwort mit demselben Verschlüsselungs-Datenwort verknüpft wird wie aufnahmeseitig.

Die Daten werden also aufnahmeseitig mit einer vorgegebenen Folge von Verschlüsselungs-Datenworten EXKLUSIV-ODER verknüpft. Damit werden die Daten in quasi verschlüsselter Form auf den Datenträger geschrieben. Wiedergabeseitig muß diese Verschlüsselung rückgängig gemacht werden, was dadurch geschieht, daß die Datenworte wieder mit derselben Verschlüsselungsfolge verknüpft werden, wobei jedes einzelne Datenwort mit demselben Verschlüsselungsdatenwort verknüpft werden muß. Sind nun die Daten in ihrer Reihenfolge vertauscht, so entsteht bei der Wiedergabe nach der Rückgängigmachung der Verschlüsselung ein Datenwort, das keinen Sinn ergibt. Bei der Wiedergabe führt dies dazu, daß eine deutliche Bildstörung eintritt. Auf diese Weise kann also erkannt werden, ob Fehler in den Daten, insbesondere in der Reihenfolge der Daten vorliegen, um bei der Wiedergabe diese erkannten Fehler beispielsweise zu verdecken.

Eine weitere Ausgestaltung der Erfindung sieht für die Anordnung für ein Gerät zur Aufzeichnung und/oder Wiedergabe digitaler datenreduzierter Daten, das alle Videodaten vor Aufzeichnung mit einem Fehlerschutzkode versieht, welcher wiedergabeseitig zur Fehlerkorrektur herangezogen wird, vor, daß die Anordnung aufnahmeseitig die Formung der Datenblöcke vor Erzeugung des Fehlerschutzkodes vornimmt und daß das Gerät wiedergabeseitig zunächst die Fehlerkorrektur und dann die Auswertung der Datenblöcke vornimmt.

Die meisten Geräte zur Aufzeichnung und/oder Wiedergabe digitaler Videodaten arbeiten mit Fehlerschutzkodes. Die Daten werden vor Aufzeichnung mit einem Fehlerschutzkode versehen, welcher mit auf das Band geschrieben wird. Wiedergabeseitig kann der Fehlerschutzkode einerseits dazu herangezogen werden, Fehler in den ausgelesenen Daten zu erkennen, andererseits kann der Fehlerschutzkode in Grenzen zur Korrektur dieser Fehler eingesetzt werden.

Die durch die Anordnung vorgenommene erfindungsgemäße Gestaltung der Datenblöcke und in deren Auswertung kann auch bei einem Gerät, das mit einem derartigen Fehlerschutzkode arbeitet, eingesetzt werden. Dazu muß die Formung der Datenblöcke vor Erzeugung des Fehlerschutzkodes vorgenommen werden. Wiedergabeseitig wird dann zunächst die Fehlerkorrektur vorgenommen. Nach erfolgter Fehlerkorrektur liegen dann wieder die Datenblöcke in ihrer ursprünglichen Form vor und können ausgewertet werden.

Geräte zur Aufzeichnung und/oder Wiedergabe digitaler Videodaten können darüber hinaus auch eine Verwürfelung der Daten vor deren Aufzeichnung vornehmen. Damit wird an sich bezweckt, daß hintereinanderliegende Daten, die beispielsweise bei einem nicht datenreduzierten Videosignal hintereinanderliegende Bildpunkte einer Bildzeile repräsentieren, an relativ weit auseinanderliegenden Stellen des Bandes eingeschrieben werden. Dies führt dazu, daß Fehler des Datenträgers sich auf mehrere Bildbereiche oder sogar mehrere Bilder des Signals verteilen, so daß sie einerseits nicht so stark störend in Erscheinung treten und daß andererseits in vielen Fällen sogar eine Korrektur dieser Fehler möglich ist.

Auch für derartige Geräte kann die Anordnung die erfindungsgemäße Erzeugung der Datenblöcke vornehmen. Dazu ist nach einer weiteren Ausgestaltung der Erfindung vorgesehen, daß das Geräte eine Einheit zur inversen Verwürfelung der Daten der Datenblöcke aufweist, welche die Daten aufnahmeseitig in der Weise verwürfelt, daß die Daten nach der Datensicherheits-Verwürfelung wieder in der gleichen Reihenfolge auf das Band geschrieben werden, in der sie ursprünglich in den Datenblöcken angeordnet waren, und daß das Gerät wiedergabeseitig nach Rückgängigmachung der Datensicherheits-Verwürfelung eine inverse Wiedergabe-Verwürfelung vornimmt, welche die Daten ausgangsseitig wieder in der ursprünglichen Reihenfolge innerhalb ihrer Datenblöcke liefert.

Die inverse Verwürfelung der Daten dient also dazu, die in dem Gerät ohnehin vorgesehene Datensicherheits-Verwürfelung quasi auszuschalten. Die Verwürfelung arbeitet invers zu dieser Datensicherheits-Verwürfelung, was dazu führt, daß die Daten wieder in der ursprünglichen Reihenfolge auf das Band geschrieben werden. Dies ist wichtig, da ja die Daten in den Datenblöcken der ersten Kategorie anhand ihrer Position erkannt werden.

Wiedergabeseitig gilt das entsprechende. Es wird also zunächst die Datensicherheits-Verwürfelung rückgängig gemacht und anschließend wird eine inverse Wiedergabeverwürfelung vorgenommen, welche die Daten wieder in ihrer ursprünglichen Reihenfolge liefert.

Die Erfindung wird nachfolgend anhand der Zeichnung näher erläutert. Es zeigen:
Fig. 1 ein Blockschaltbild eines Gerätes zur Aufzeichnung und/oder Wiedergabe digitaler datenreduzierter Videodaten, die mittels einer erfindungsgemäßen Anordnung in Datenblöcken geordnet und in dieser Ordnung auf einen Datenträger geschrieben werden,
Fig. 2 einige Datenblöcke der ersten und der zweiten Kategorie, wie sie beispielsweise von der Anordnung gemäß Fig. 1 erzeugt werden können,
Fig. 3 eine detaillierte Darstellung der Verknüpfung der Datenblöcke mit Verschlüsselungs-Datenworten des Gerätes gemäß Fig. 1 und
Fig. 4 eine schematische Darstellung einiger teils verwürfelter Datenblöcke, wie sie in dem Gerät gemäß Fig. 1 auftreten können.

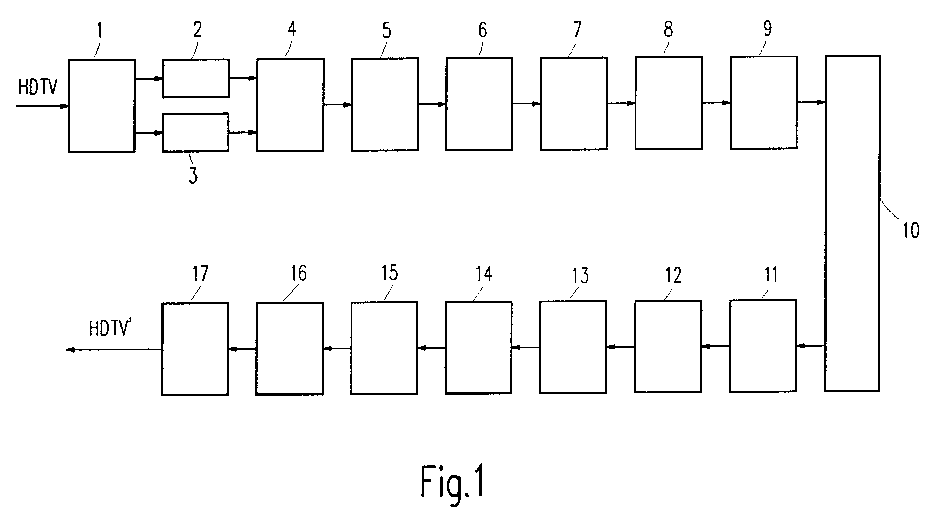

Fig. 1 zeigt in einer schematischen Darstellung einige Funktionsblöcke eines Gerätes zur Aufzeichnung und/oder Wiedergabe digitaler datenreduzierter Videodaten sowie der erfindungsgemäßen Anordnung. Das Gerät ist nicht vollständig dargestellt sondern nur in den Funktionsblöcken angedeutet, die für die Erfindung wesentlich sind.

Ein digitales Videosignal, beispielsweise ein hochauflösendes, hochzeiliges Videosignal, ist in der Fig. mit HDTV gekennzeichnet und wird einer Einheit 1 zur Datenreduktion zugeführt. Diese Einheit kann sowohl innerhalb wie auch außerhalb des Gerätes zur Aufzeichnung der Daten vorgesehen sein. Die genaue Arbeitsweise der Einheit 1 kann verschieden sein und ist nicht Gegenstand der Erfindung. Wesentlich für die Erfindung ist, daß die Einheit 1 zur Datenreduktion zwei verschiedene Kategorien von Daten liefert, nämlich Daten fester Länge und Daten variabler Länge. Dabei darf das Verhältnis der Datenmengen der Daten dieser beiden Kategorien schwanken. Die Daten fester Länge werden in einen in der Fig. 1 angedeuteten Speicher 2 eingelesen, der als sogenannter First-In-First-Out-Speicher (FIFO) gestaltet ist. Die Daten variabler Länge werden in einen FIFO-Speicher 3 eingelesen.

Den beiden FIFO-Speichern 2 und 3 ist eine Anordnung 4 nachgeschaltet, welche die Daten aus den FIFO's 2 und 3 ausliest und der Datenblöcke zweier Kategorien erzeugt. In den Datenblöcken einer ersten Kategorie sind sowohl Daten fester Länge wie auch Daten variabler Länge angeordnet. Die Daten fester Länge werden dabei an vorbestimmte Positionen innerhalb der Datenblöcke erster Kategorie angeordnet. In den Datenblöcken der zweiten Kategorie werden nur Daten variabler Länge angeordnet.

Die Einheit zur Datenreduktion 1, die beiden FIFO-Speicher 2 und 3 und auch die Anordnung 4 zur Datenblockerzeugung können sowohl innerhalb, wie auch außerhalb des Gerätes angeordnet sein.

Der Anordnung 4 zur Erzeugung der Datenblöcke ist eine Verknüpfungsschaltung 5 nachgeschaltet, welche die von der Anordnung 4 gelieferten Datenblöcke mit eine vorgegebenen Folge von Verschlüsselungs-Datenworten verknüpft.

Der Einheit 5 wiederum ist eine Einheit 6 zur inversen Verwürfelung nachgeschaltet. Dieser ist wiederum eine Einheit 7 zur Erzeugung eines Fehlerschutzkodes nachgeschaltet. Das Ausgangssignal der Einheit 7 gelangt auf eine Einheit 8 zur Datensicherheitsverwürfelung, der eine Einheit 9 nachgeschaltet ist, die einen weiteren Fehlerschutzkode erzeugt. Das Ausgangssignal der Einheit 9 wird auf einen Datenträger 10, bei dem es sich beispielsweise um ein Magnetband handeln kann, geschrieben.

Bei dem in Fig. 1 dargestellten Beispielsfalle wird davon ausgegangen, daß ein handelsübliches Gerät zur Aufzeichnung digitaler Videodaten eingesetzt wird. Derartige Geräte weisen die Einheiten 7 und 9 zur Fehlerschutzkodierung sowie die Einheit 8 zur Datenverwürfelung auf. Die erfindungsgemäße Anordnung kann auch für derartige Geräte eingesetzt werden. Dazu muß die in der Einheit 8 vorgenommene Verwürfelung in der Weise quasi ausgeschaltet werden, daß die Anordnung mittels der Einheit 6 zuvor eine solche Verwürfelung vornimmt, daß nach Verwürfelung durch die Einheit 8 diese ausgangsseitig die Daten wieder in der gleichen Reihenfolge liefert, wie sie der Einheit 6 eingangsseitig zugeführt wurden. Für die Erfindung ist dies wesentlich, da die Daten fester Länge anhand ihrer Position erkannt werden; das bedeutet, daß die Position der Daten innerhalb der Datenblöcke sich nicht ändern darf. Die Datenblöcke, wie sie von der Einheit 4 geliefert werden bzw. in der Einheit 5 mit einer Verschlüsselungs-Datenwortfolge verknüpft werden, müssen also in dieser Reihenfolge unverändert auf den Datenträger 10 geschrieben werden.

Das in Fig. 1 angedeutete Gerät weist wiedergabeseitig eine Einheit 11 auf, der die von dem Datenträger 10 ausgelesenen Daten zugeführt werden und die den Fehlerschutzkode, der aufnahmeseitig von der Einheit 9 erzeugt wurde, bearbeitet. Die Einheit 11 erkennt gegebenenfalls Fehler der Daten und kann anhand des Fehlerschutzkodes diese in Grenzen rückgängig machen. Der Einheit 11 ist eine Einheit 12 nachgeschaltet, welche die Verwürfelung, die durch die Einheit 8 aufnahmeseitig vorgenommen wurde, rückgängig macht. Das Ausgangssignal der Einheit 12 gelangt auf eine Einheit 13, die den Fehlerschutzkode, der aufnahmeseitig von der Einheit 7 erzeugt wurde, bearbeitet und gegebenenfalls Fehler korrigiert.

Die Einheiten 7 bis 13 können beispielsweise in einem konventionellen Gerät zur Aufzeichnung datenreduzierter Videodaten vorgesehen sein, während die weiteren Einheiten Bestandteil der erfindungsgemäßen Anordnung sind und außerhalb dieses Gerätes angeordnet sein können. Selbstverständlich können auch in einem modifzierten Gerät alle Schaltungseinheiten der Darstellung gemäß Fig. 1 innerhalb des Gerätes angeordnet sein.

Nach Bearbeitung des Fehlerschutzkodes in der Einheit 13 wird in einer nachgeschalteten Schaltungseinheit 14 eine inverse Wiedergabe-Verwürfelung vorgenommen. Diese macht die durch die Einheit 12 vorgenommene Entwürfelung wieder rückgängig. D.h., daß die Datenblöcke in der Reihenfolge wie sie von dem Datenträger 10 gelesen wurden, am Ausgang der Einheit 14 wieder zur Verfügung stehen.

In einer Einheit 15 wird eine Verknüpfung der von der Einheit 14 gelieferten Datenworte mit einer Folge von Verknüpfungs-Datenworten vorgenommen, die identisch ist mit derjenigen Folge, mit der die gleichen Daten in der Einheit 5 verschlüsselt wurden. Dabei muß jedes einzelne Datenwort in der Einheit 15 mit demselben Verschlüsselungs-Datenwort verknüpft werden, in dem es vor Aufzeichnung in der Einheit 5 verknüpft wurde.

Der Einheit 15 ist eine Anordnung 16 zur Dekodierung der Datenblöcke vorgesehen. Diese Einheit wertet die Datenblöcke aus und kann anhand der Position der Daten fester Länge innerhalb der Datenblöcke erkennen, um welche Daten es sich handelt. Der Einheit 16 ist eine Anordnung 17 nachgeschaltet, in welcher die Datenreduktion rückgängig gemacht wird.

Beispielsweise bei normaler Wiedergabegeschwindigkeit werden von der Einheit 16 sämtliche Daten aus den Datenblöcken an die Einheit 17 geliefert, die aus den vollständigen datenreduzierten Daten das ursprüngliche HDTV-Signal wieder rekonstruiert. Dieses rekonstruierte Signal ist in der Fig. mit HDTV' gekennzeichnet.

Bei Wiedergabe-Sonderfunktionen, d.h. also solchen Funktionen, bei denen eine Bildwiedergabe stattfindet, bei der der Datenträger 10 nicht mit der normalen Wiedergabe-Geschwindigkeit bewegt wird, bzw. bei der die Datentworte in schnellerer Folge bzw. nur teileweise aus dem Datenträger 10 ausgelesen werden, identifiziert die Einheit 16 die Datenblöcke der ersten Kategorie, in denen an vorbestimmten Positionen die Daten fester Länge angeordnet sind. Es genügt für diese Wiedergabe-Sonderfunktionen die Daten fester Länge in den Datenblöcken der ersten Kategorie zu identifizieren, was anhand deren Position innerhalb der Datenblöcke einfach möglich ist. Es werden dann nur diese Daten fester Länge an die Anordnung 17 zur Rückgängigmachung der Datenreduktion geliefert, die anhand dieser Daten eine Rekonstruktion des Bildes mit verminderter Bildqualität vornimmt. Somit ist auch in Wiedergabe-Sonderfunktionen eine Bildwiedergabe möglich, die es beispielsweise beim Rangieren des Datenträgers 10 gestattet, zu erkennen, an welcher Stelle sich der Datenträger 10 befindet bzw. von welcher Stelle des Datenträgers 10 die Daten gerade ausgelesen werden.

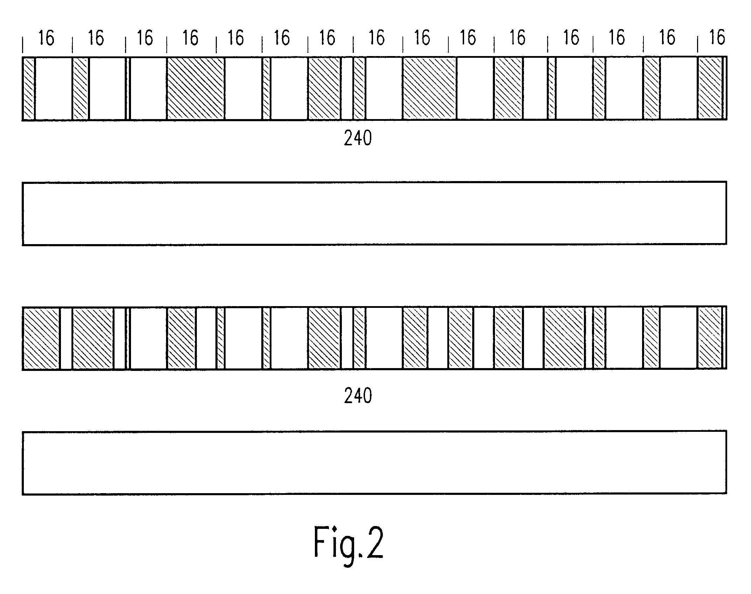

Die Darstellung gemäß Fig. 2 zeigt exemplarisch vier Datenblöcke, von denen der erste und der dritte der Darstellung Datenblöcke der ersten Kategorie und der zweite und vierte Datenblöcke der zweiten Kategorie sind.

Die Datenblöcke der ersten Kategorie gliedern sich ihrerseits in Datengruppen, wobei jede Gruppe 16 Byte umfaßt. In der Anfangsposition jeder dieser Datengruppen sind zunächst Daten fester Länge angeordnet, die in der Fig. als schraffierte Bereiche angedeutet sind. Die hellen Bereiche innerhalb der Datenblöcke der Darstellung gemäß Fig. 2 deuten Bereiche an, in denen Daten variabler Länge untergebracht sind. Es ist dabei selbstverständlich je nach Datenanfall nicht unbedingt erforderlich, daß alle diese Bereiche durch Daten variabler Länge ausgefüllt werden.

Die in der Fig. 2 angedeuteten Datenblöcke werden entsprechen der Darstellung gemäß Fig. 1 von der Anordnung 4 aufnahmeseitig geliefert und wiedergabeseitig von der Einheit 16 wieder zur Verfügung gestellt.

Bei einer Wiedergabe in normaler Bandgeschwindigkeit werden sämtliche Daten der Datenblöcke gemäß Fig. 2 von der Einheit 16 an die Einheit 17 geliefert, die aus den Daten das vollständige HDTV-Signal wieder herstellt. Bei Wiedergabe-Sondergeschwindigkeiten, also beispielsweise Bildsuchlauf, ist es jedoch nicht möglich, sämtliche Daten von dem Datenträger 10 gemäß der Darstellung Fig. 1 auszulesen. Für die Daten variabler Länge wäre dies aber erforderlich, da diese Daten nur dann dekodiert werden können, wenn ihre Vorgeschichte bekannt ist. Die Ursache hierfür liegt darin, daß die Daten variabler Länge durch eine Entropiekodierung entstehen. Dies bedeutet, daß für die Dekodierung Daten variabler Länge immer eine bestimmte Menge von zuvor übertragenen Daten bekannt sein muß. Da jedoch bei Sonderfunktionen nur ein Teil der Daten von dem Datenträger 10 ausgelesen werden kann, ist eine Auswertung der Daten variabler Länge in diesem Falle nicht möglich. Es werden dann nur die Daten fester Länge ausgewertet, die in den Datenblöcken der ersten Kategorie an vorbestimmten Positionen, vorzugsweise zu Beginn jeder Gruppe innerhalb dieser Datenblöcke angeordnet sind. Innerhalb einer Gruppe kann eine differierende Menge derartiger Daten angeordnet sein, was in der Fig. 2 durch unterschiedlich große schraffierte Bereiche angedeutet ist. Die Menge dieser Daten fester Länge kann durch ein entsprechendes Datenwort innerhalb der Gruppe angegeben werden.

Bei der Wiedergabe-Sonderfunktionen genügt es nun, einzelne Daten fester Länge aus den Gruppen herauszulesen und anhand dieser einen ungefähren Bildinhalt zu rekonstruieren. Die Vorgeschichte der Daten ist dabei irrelevant und anhand der Daten innerhalb der Datenblöcke bzw. der Gruppen kann wiedergabeseitig sofort erkannt werden, um welche Daten aus dem ursprünglichen datenreduzierten Videosignal es sich handelt. Die Daten können also alleine anhand ihrer Position identifiziert werden.

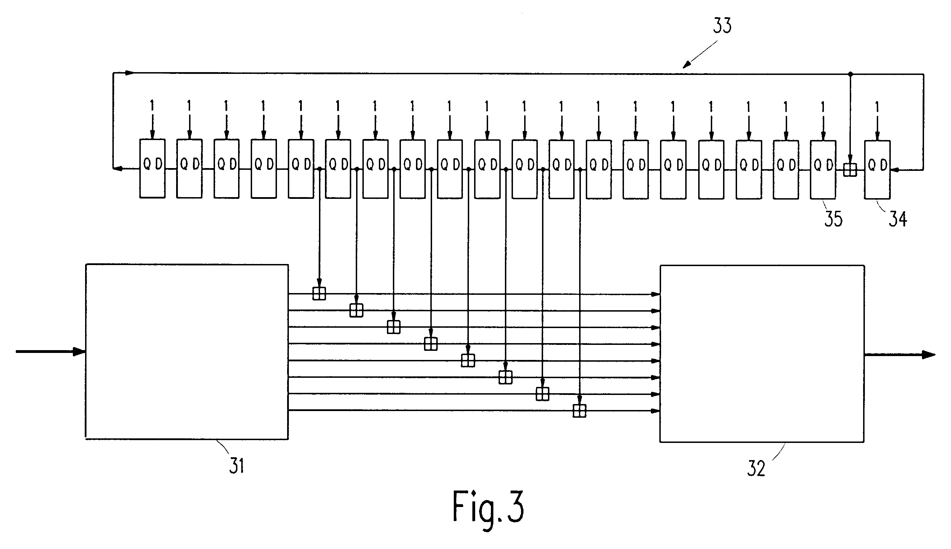

In Fig. 3 ist eine Einheit dargestellt, welche eine Verknüpfung der Datenblöcke mit einer vorgegebenen Folge von Verschlüsselungs-Datenworten vornimmt.

Bei der in Fig. 3 angedeuteten Einheit kann es sich sowohl um die in dem Gerät gemäß Fig. 1 aufnahmeseitig vorgesehene Einheit 5 wie auch um die wiedergabeseitig vorgesehene Einheit 15 handeln.

Im ersten Fall repräsentiert der Block 31 gemäß Fig. 3 die Einheit 4 entsprechend Fig. 1 zur Erzeugung der Datenblöcke. In diesem Fall repräsentiert eine Einheit 32 gemäß Fig. 3 die Einheit 6 der Darstellung gemäß Fig. 1 zur Vornahme der inversen Verwürfelung.

In Fig. 3 ist ferner eine Kette 33 von hintereinandergeschalteten D-Registern vorgesehen. Das Ausgangssignal der D-Registerkette 33 ist sowohl auf ein erstes, innerhalb der Gruppe 33 vorgesehenes D-Register 34, wie auch auf den Eingang eines in der Kette als zweites Registers vorgesehenes D-Registers 35 geschaltet. Die übrigen D-Register der Kette 33 sind hintereinandergeschaltet.

Wird die Registerkette 33 beispielsweise zu Beginn eines jeden neuen Vollbildes des digitalen Videosignals, dessen Daten in Form von Datenblöcken von der Einheit 31 geliefert wird, mit einer 1 geladen, so nehmen die Zustände der Register innerhalb der Registerkette 33 mit jedem Takt, mit dem die Daten durch die Registerkette geschoben werden, einen neuen Zustand ein. Es können nur die Ausgangssignale einiger der Register zu Verschlüsselungs-Datenworten herangezogen werden. Mit jedem Takt, mit dem die Daten durch die Registerkette 33 geschoben werden, entsteht dann ein neues Verschlüsselungs-Datenwort. Die Registerkette 33 liefert auf diese Weise eine vorbestimmte Folge von Verschlüsselungs-Datenworten, die sowohl aufnahmeseitig in der Einheit 5 gemäß Fig. 1 wie auch in der Einheit 15 gemäß Fig. 1 eingesetzt werden kann. Diese Verschlüsselungs-Datenworte werden EXKLUSIV-ODER mit den Datenblöcken der Einheit 31 verknüpft. Das so mit den Verschlüsselungs-Datenworten verknüpfte Signal wird der Einheit 32 zugeführt.

Wird eine identische Registerkette 33 in der Darstellung gemäß Fig. 1 sowohl in der Einheit 5 wie auch in der Einheit 15 eingesetzt, so wird die aufnahmeseitig in der Einheit 5 vorgenommene Verschlüsselung in der wiedergabeseitig in der Einheit 15 genau rückgängig gemacht. Dies gilt jedoch nur solange, wie die Datenworte in der ursprünglichen Reihenfolge, wie sie von der Einheit 4 geliefert wurden, erhalten bleiben. Tritt jedoch beim Auslesen oder beim weiteren Verarbeiten der Daten ein Fehler ein, so gelangen die Daten unter Umständen nicht mehr in der gleichen Reihenfolge wiedergabeseitig an die Einheit 15. In diesem Falle würde die Entschlüsselung, also die wiederum vorgenommene Verknüpfung mit derselben Folge von Datenworten in der Einheit 15 ein unsinniges Ergebnis liefern, da die einzelnen Bits der Datenworte mit falschen Verschlüsselungs-Datenworten verknüpft würden. Es würde dann ein unsinniges Ausgangssignal an die Einheit 16 bzw. 17 der Darstellung gemäß Fig. 1 geliefert werden, was deutliche Bildstörungen zur Folge hat. Somit können fehlerhafte Daten erkannt werden.

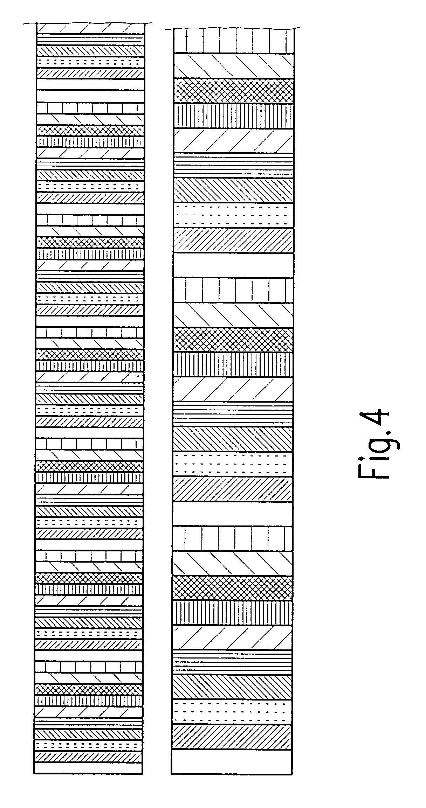

In Fig. 4 sind zwei Zeilen mit einigen Daten bzw. Datenblöcken angedeutet. Diese schematische Darstellung zeigt in der zweiten Zeile eine Reihe von unterschiedlich schraffierten Datenworten, wie sie beispielsweise von der Einheit 4 gemäß Fig. 1 geliefert werden können.

Die erste Zeile zeigt die entsprechenden Datenblöcke, jedoch in verwürfelter Form. Diese Verwürfelung kann beispielsweise durch die Einheit 8 gemäß Fig. 1 vorgenommen worden sein. Die Datenblöcke sollten jedoch nicht in dieser verwürfelten Form auf den Datenträger 10 gemäß Fig. 1 geschrieben werden, da dann die Position der Daten innerhalb der Datenblöcke nicht mehr definiert ist und die Daten fester Länge anhand ihrer Position innerhalb ihrer Datenblöcke der ersten Kategorie nicht mehr erkannt werden können. Daher ist in der Darstellung gemäß Fig. 1 eine Einheit zur inversen Verwürfelung vorgesehen. Diese Einheit nimmt eine solche Verwürfelung vor, daß am Ausgang der Einheit 8 wieder die Datenblöcke entsprechend der zweiten Zeile der schematischen Darstellung gemäß Fig. 4 geliefert werden.

Entsprechendes gilt für den Wiedergabezweig der Darstellung gemäß Fig. 1. Die ursprünglich auf dem Datenträger 10 entsprechend der zweiten Zeile der Darstellung gemäß Fig. 4 geordneten Datenblöcke werden durch die Einheit 12 wieder verwürfelt, beispielsweise entsprechend der ersten Zeile der Darstellung gemäß Fig. 4. Diese Verwürfelung wird durch die Einheit 14 der Darstellung gemäß Fig. 1 wieder rückgängig gemacht, so daß wieder die ursprüngliche Folge entsprechend der zweiten Zeile der Darstellung gemäß Fig. 4 entsteht. Dies ist wichtig, da nur anhand dieser ursprünglichen Reihenfolge sowohl der Datenblöcke aufeinander wie auch der Daten innerhalb der Datenblöcke die Positon der Datenblöcke fester Länge erkannt werden können und anhand dieser Position identifziert werden kann, um welche Daten fester Länge es sich jeweils handelt.

## Patentansprüche

1. Anordnung für ein Gerät zur Aufzeichnung und/oder Wiedergabe digitaler datenreduzierter Videodaten auf bzw. von einem Datenträger, die teilweise als Daten fester Länge, die für eine Wiedergabe mit verminderter Qualität ausreichen, und teilweise als Daten variabler Länge vorliegen,
dadurch gekennzeichnet, daß die Anordnung bei Aufzeichnung der Videodaten auf den Datenträger Datenblöcke wenigstens einer ersten Kategorie formt, in denen das Gerät an vorbestimmten Positionen vorbestimmte Daten fester Länge und in den übrigen Bereichen Daten variabler Länge anordnet, und daß die Anordnung beim Auslesen der Daten von dem Datenträger anhand der Position der Daten fester Länge innerhalb der Datenblöcke der ersten Kategorie erkennt, um welche Daten aus den ursprünglichen datenreduzierten Videodaten es sich handelt.

2. Anordnung nach Anspruch 1,
dadurch gekennzeichnet, daß die Anordnung zusätzlich Datenblöcke einer zweiten Kategorie formt, in die die Anordnung ausschließlich Daten variabler Länge einfügt.

3. Anordnung nach Anspruch 1 oder Anspruch 2,,
dadurch gekennzeichnet, daß die Anordnung in wenigstens einer Wiedergabe-Sonderfunktion, in der die Abtastung des Datenträgers in einer anderen als einer Wiedergabe-Normalgeschwindigkeit erfolgt, ausschließlich die Daten fester Länge in den Datenblöcken der ersten Kategorie zur Wiedergabe auswertet.

4. Anordnung nach einem der Ansprüche 1 bis 3,
dadurch gekennzeichnet, daß die Datenblöcke und die Daten innerhalb der Datenblöcke in unveränderter Reihenfolge auf den Datenträger geschrieben werden.

5. Anordnung nach einem der Ansprüche 1 bis 4, dadurch gekennzeichnet, daß die Daten innerhalb der Datenblöcke erster Kategorie in Gruppen zu je 16 Byte unterteilt sind, daß die ersten Daten jeder Gruppe Daten fester Länge sind und daß zu Beginn jeder Gruppe in den Daten fester Länge angegeben ist, wieviele Daten fester Länge innerhalb der Gruppe angeordnet sind.

6. Anordnung nach einem der Ansprüche 1 bis 5,
dadurch gekennzeichnet, daß das Gerät jeden zweiten Datenblock als Block erster Kategorie formt.

7. Anordnung nach einem der Ansprüche 1 bis 6,
dadurch gekennzeichnet, daß die Daten in den Datenblöcken vor Aufzeichnung auf den Datenträger mit einer vorgegebenen Folge von Verschlüsselungs-Datenworten EXKLUSIV-ODER verknüpft werden und daß die Daten wiedergabeseitig mit derselben Folge von Verschlüsselungs-Datenworten so verknüpft werden, daß bei fehlerfreier Wiedergabe jedes Datenwort mit demselben Verschlüsselungs-Datenwort verknüpft wird wie aufnahmeseitig.

8. Anordnung für ein Gerät zur Aufzeichnung und/oder Wiedergabe digitaler datenreduzierter Videodaten, das alle Videodaten vor Aufzeichnung mit einem Fehlerschutzcode versieht, welcher wiedergabeseitig zur Fehlerkorrektur herangezogen wird, nach einem der Ansprüche 1 bis 7,
dadurch gekennzeichnet, daß die Anordnung aufnahmeseitig die Formung der Datenblöcke vor Erzeugung des Fehlerschutzcodes vornimmt und daß das Gerät wiedergabeseitig zunächst die Fehlerkorrektur und dann die Auswertung der Datenblöcke vornimmt.

9. Anordnung für ein Gerät mit einer Einheit zur Datensicherheits-Verwürfelung der Daten vor deren Aufzeichnung und zur wiedergabeseitigen Rückgängigmachung der Datensicherheits-Verwürfelung nach Anspruch 8,
dadurch gekennzeichnet, daß die Anordnung eine Einheit zur inversen Verfwürfelung der Daten der Datenblöcke aufweist, welche die Daten aufnahmeseitig in der Weise verwürfelt, daß die Daten nach der Datensicherheits-Verwürfelung wieder in der gleichen Reihenfolge auf das Band geschrieben werden, in der sie ursprünglich in den Datenblöcken angeordnet waren, und daß die Anordnung wiedergabeseitig nach Rückgängigmachung der Datensicherheits-Verwürfelung eine inverse Wiedergabe-Verwürfelung vornimmt, welche die Daten ausgangsseitig wieder in der ursprünglichen Reihenfolge innerhalb ihrer Datenblöcke liefert.
